# EUROPÄISCHE PATENTANMELDUNG

(11) **EP 1 772 300 A2**
(43) Veröffentlichungstag der Anmeldung: **11.04.2007**
(21) Anmeldenummer: 06019622.7
(22) Anmeldetag: 20.09.2006
(51) Int. Cl.: B60J 7/047

(54) **Fahrzeugdach mit mindestens zwei öffnungsfähigen Dachteilen**

(30) Priorität: 04.10.2005 DE 102005047505
(71) Anmelder: Magna Car Top Systems GmbH, 74321 Bietigheim-Bissingen (DE)
(72) Erfinder: Striegel, Klaus, 21109 Hamburg (DE); Klein, Berthold, 71277 Rutesheim (DE); Salz, Wolfram, 74343 Sachsenheim (DE); Katrini, Waleri, 01257 Dresden (DE)

(57) **Zusammenfassung**

Ein Fahrzeugdach mit mindestens zwei öffnungsfähigen Dachteilen (4,5), die in Schließposition eine Dachöffnung (3) abdecken, welche in Öffnungsposition freigegeben ist, weist eine Stützkinematik (7) auf, die in Schließposition eines der Dachteile (5), das absenkbar ausgebildet ist, abstützt. Die Stützkinematik (7) wird von dem anderen Dachteil (4) in ihre Stützposition beaufschlagt.

## Beschreibung

Die Erfindung bezieht sich auf ein Fahrzeugdach mit mindestens zwei öffnungsfähigen Dachteilen nach dem Oberbegriff des Anspruchs 1.

In der Druckschrift DE 199 53 104 C1 wird ein Fahrzeugdach mit zwei in einer gemeinsamen Dachöffnung angeordneten Deckeln beschrieben, die zwischen einer die Dachöffnung überdeckenden Schließposition und einer Öffnungsposition zu verstellen sind, in der der hintere Deckel gegenüber seiner Schließlage abgesenkt ist und unter dem vorderen Deckel zu liegen kommt. Zur Betätigung der Deckel ist eine Verstellkinematik vorgesehen, die eine Führungskulisse mit darin eingebrachten Kulissenbahnen umfasst, in denen seitlich ausragende Führungsbolzen an den Deckeln geführt sind. Die Führungskulissen weisen einen oberen, horizontalen Abschnitt und einen demgegenüber nach unten versetzten Abschnitt auf, wobei der obere horizontale Abschnitt der Schließposition der Deckel und der nach unten versetzte Abschnitt der Öffnungsposition jeweils eines Deckels zugeordnet ist. Zum Öffnen wird einer der Deckel abgesenkt und unter den jeweils anderen Deckel verfahren. Die Führungskulissen befinden sich in einem in Längsrichtung verschieblichen Schlitten, der über einen Antriebsmechanismus relativ zu den Deckeln verschoben wird, wodurch die Anhebe- bzw. Absenkbewegung der Deckel erreicht wird.

Über die horizontalen Abschnitte der Führungskulisse wird zwar bei geschlossenem Dach eine wirksame vertikale Abstützung der Deckel erreicht. Allerdings ist hierfür eine komplexe Kinematik erforderlich. Es muss insbesondere die Stellbewegung des die Führungskulissen aufweisenden Schlittens mit der Verschiebebewegung der Deckel koordiniert werden.

Von diesem Stand der Technik ausgehend liegt der Erfindung die Aufgabe zu Grunde, mit einfachen konstruktiven Maßnahmen ein Fahrzeugdach mit mindestens zwei öffnungsfähigen Dachteilen in einer Dachöffnung anzugeben, die bei geschlossener Dachposition stabil gehalten sind. Es soll zweckmäßig eine unerwünschte Absenkbewegung eines Dachteiles sicher verhindert werden.

Diese Aufgabe wird erfindungsgemäß mit den Merkmalen des Anspruchs 1 gelöst. Die Unteransprüche geben zweckmäßige Weiterbildungen an.

Das erfindungsgemäße Fahrzeugdach besitzt mindestens zwei öffnungsfähige Dachteile in einer Dachöffnung, von denen zumindest ein Dachteil gegenüber dem Niveau der festen Dachaußenhaut in eine abgesenkte Lage zu verstellen ist. Zur Fixierung des Absenkbaren Dachteiles bei geschlossenem Fahrzeugdach ist eine Stützkinematik vorgesehen, die in Schließposition das absenkbare Dachteil abstützt, so dass eine unerwünschte bzw. unbeabsichtigte Absenkbewegung bei geschlossenem Dach sicher verhindert wird. Die das absenkbare Dachteil beaufschlagende Stützkinematik wird ihrerseits von dem anderen Dachteil in Richtung ihrer Stützposition beaufschlagt, wodurch auch bei verhältnismäßig hohen, auf das Dachteil wirkenden Kräften ein versehentliches Nachgeben der Stützkinematik und damit einhergehend ein Absenken des Dachteiles verhindert wird.

Das absenkbare Dachteil wird über die Stützkinematik in seiner Schließposition höhenfixiert, wobei die Stützkinematik von dem anderen Dachteil arretiert wird. Auf diese Weise kann allein über die Stellbewegung des anderen Dachteiles - im folgenden erstes Dachteil genannt - eine Arretierung der Höhenposition des absenkbaren, zweiten Dachteiles durchgeführt werden. Sowohl die Überführung der Stützkinematik in die Stützposition als auch das Halten der Stützkinematik in der erreichten Stützposition wird zweckmäßig ausschließlich über das erste Dachteil erreicht. Auf diese Weise ist eine verhältnismäßig einfach ausgeführte Stützkinematik für eine wirksame Abstützung bei geschlossenem Dach ausreichend. Es ist keine komplizierte Kopplungskinematik für eine Bewegungskopplung zwischen den beiden Dachteilen erforderlich, so dass für die Durchführung der Stellbewegung der Dachteile auf konventionelle, aus dem Stand der Technik bekannte Kinematiken zurückgegriffen werden kann.

In einer vorteilhaften Ausführung ist vorgesehen, dass das erste Dachteil, das die Stützfunktion auslöst, keine Absenkbewegung, sondern lediglich eine Verschiebebewegung ausführen kann und zu diesem Zweck in Seitenführungen, die die Dachöffnung seitlich begrenzen, in Höhe der festen Dachaußenhaut geführt ist. Zum Öffnen des Daches wird das zweite Dachteil abgesenkt, woraufhin das erste Dachteil horizontal über das zweite Dachteil verschoben werden kann. Gegebenenfalls kommt auch eine zusätzliche Verschiebebewegung des zweiten, absenkbaren Dachteiles in Betracht, wodurch insgesamt eine größere Dachöffnung freigelegt werden kann.

In einer vorteilhaften Weiterbildung ist die Stützkinematik als Kniehebelkinematik ausgebildet, die von dem ersten Dachteil in eine zumindest annähernde Strecklage zu verstellen ist. In dieser zumindest annähernden Strecklage ist das absenkbare Dachteil von einem Kniehebellenker der Kniehebelkinematik gestützt. Diese Kniehebelkinematik umfasst zweckmäßig zwei gelenkig verbundene Kniehebellenker, die von dem ersten Dachteil, insbesondere mittels eines vom ersten Dachteil beaufschlagten Übertragungslenkers, in die Strecklage oder zumindest beinahe in die Strecklage verstellt werden. Hierbei kann es zweckmäßig sein, die Strecklage nur annähernd, jedoch nicht vollständig zu erreichen, um sicherzustellen, dass beim Öffnen des Daches die Kniehebelkinematik ohne weiteres wieder die Strecklage verlassen kann, was im Falle einer Totpunktlage oder Übertotpunktlage nicht ohne zusätzliche Kraftbeaufschlagung möglich wäre.

Grundsätzlich kommen aber auch Totpunktlagen oder Übertotpunktlagen in Betracht, in denen das absenkbare Dachteil von der Kniehebelkinematik abgestützt ist. Um beim Öffnen des Daches die Totpunkt- bzw. Übertotpunktlage wieder verlassen zu können, kann es zweckmäßig sein, einen der Hebel oder beide Hebel der Kniehebelkinematik über einen weiteren Lenker in Richtung zusammengeklappter Position zu beaufschlagen, wobei der zusätzliche Lenker vorteilhaft ebenfalls vom ersten Dachteil betätigt wird.

Um trotz der nur annähernd erreichten Strecklage eine sichere Blockierung des Stützkinematik zu erreichen, ist die Stützkinematik vorteilhaft über ein vom ersten Dachteil zu betätigendes Bauteil gesichert. Auch dieses Bauteil, bei dem es sich insbesondere um einem Blockierschlitten handelt, der über einen Bowdenzug mit dem ersten Dachteil gekoppelt ist, wird über die Bewegung des ersten Dachteiles gesteuert, so dass auf zusätzliche Antriebseinrichtungen verzichtet werden kann. Mit dem Erreichen der Schließposition betätigt demzufolge das erste Dachteil sowohl die Stützkinematik und versetzt diese in die Stützposition als auch den Blockierschlitten, der die Stützkinematik blockiert. Beim Öffnen des Fahrzeugsdaches erfolgt der Bewegungsablauf in entgegen gesetzter Richtung, so dass zunächst der Blockierschlitten von der Stützkinematik entfernt wird, was gegebenenfalls unter Zuhilfenahme eines auf den Blockierschlitten einwirkenden Federelementes erfolgt. Anschließend wird die Abstützung des zweiten Dachteiles aufgehoben, indem die Stützkinematik von dem sich öffnenden ersten Dachteil aus ihrer Stützposition ausgelenkt wird, und schließlich kann nach dem Aufheben der Abstützung das zweite Dachteil von der Antriebseinrichtung in die abgesenkte Position verstellt werden.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Ansicht auf ein festes Fahrzeugdach mit darin eingebrachter Dachöffnung, in der zwei verstellbare Dachteile angeordnet sind,
- Fig. 2: eine Seitenansicht auf die beiden Dachteile in der Dachöffnung des Fahrzeugdaches, dargestellt in einer Zwischenlage während des Überführens von Öffnungs- in Schließposition, mit einer Stützkinematik, die von dem ersten Dachteil betätigt wird und auf das zweite Dachteil wirkt,
- Fig. 3: eine Fig. 2 entsprechende Darstellung, jedoch in weiter fortgeschrittener Annäherung an die Schließposition,
- Fig. 4: die Dachteile kurz vor Erreichen der Schließposition, mit dargestellter Betätigung der Stützkinematik, die zu einem Anheben und Blockieren des hinteren Dachteiles führt,
- Fig. 5: die Dachteile und die Stützkinematik in noch einer weiter fortgeschrittenen, an die Schließstellung angenäherten Position,
- Fig. 6: die Dachteile und die Stützkinematik in Schließstellung.

In den Figuren sind gleiche Bauteile mit gleichen Bezugszeichen versehen.

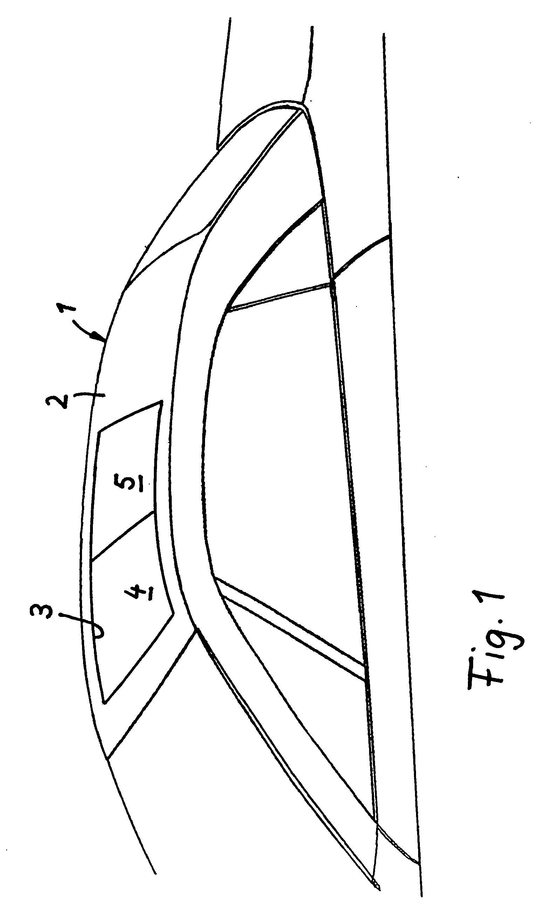

Das in Fig. 1 in perspektivischer Ansicht dargestellte Fahrzeugdach 1 ist fest ausgebildet und fest mit der Fahrzeugkarosserie verbunden. In die Dachaußenhaut 2 des Fahrzeugdaches 1 ist eine Dachöffnung 3 eingebracht, die von zwei verstellbaren Dachteilen 4 und 5 verschlossen ist. Aus der in Fig. 1 gezeigten Schließposition können die beiden Dachteile 4 und 5 in eine die Dachöffnung 3 freigebende Öffnungsposition verstellt werden. In der Schließposition liegen die Dachteile 4 und 5 in Fahrzeuglängsrichtung gesehen hintereinander.

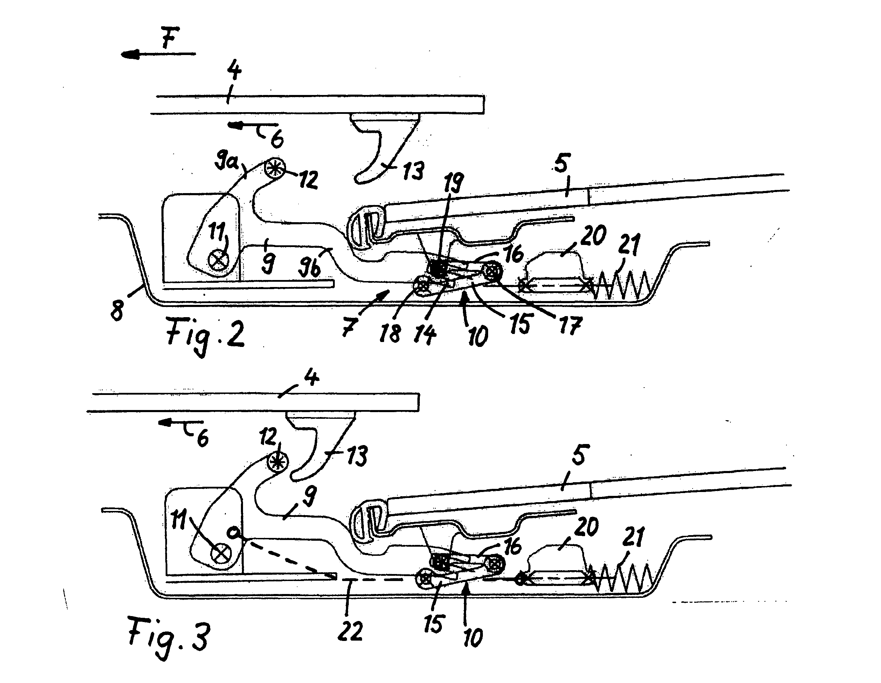

In Fig. 2 ist das Fahrzeugdach im Bereich des Dachausschnittes mit dem vorderen, ersten Dachteil 4 und dem hinteren, zweiten Dachteil 5 im Detail dargestellt. Mit Pfeil F ist die Fahrzeugvorwärtsrichtung gekennzeichnet. Gezeigt ist die Dachsituation während der Schließbewegung in einem Zwischenstadium zwischen Öffnungs- und Schließposition. Das vordere, erste Dachteil 4 wird in Pfeilrichtung 6 nach vorne, also parallel zur Pfeilrichtung F bewegt. Hierbei führt das vordere Dachteil 4 eine ausschließlich translatorische Verstellbewegung aus und bewegt sich zumindest annähernd in der Höhe des Niveaus der Dachaußenhaut.

Das hintere, zweite Dachteil 5 ist mit seiner Vorderkante nach unten, also in Richtung Fahrzeuginnenraum abgesenkt; Diese abgesenkte Position nimmt das hintere Dachteil 5 in der Öffnungsstellung des Fahrzeuges ein, in der das vordere Dachteil 4 oberhalb des hinteren Dachteiles 5 zum Liegen kommt. Zum Überführen in die Schließposition muss zunächst das vordere Dachteil 4 in Pfeilrichtung 6 nach vorne bis zum Erreichen der Schließstellung verschoben werden, anschließend kann das hintere Dachteil 5 angehoben werden, bis die Außenseite beider Dachteile 4 und 5 in einer gemeinsamen Ebene auf dem Niveau der Dachaußenhaut liegen.

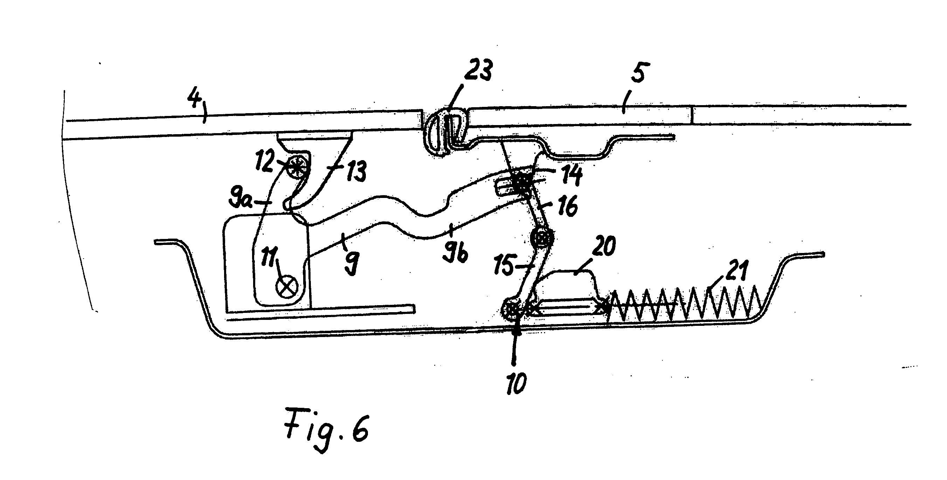

Um sicherzustellen, dass in Schießposition auch das hintere, absenkbare Dachteil 5 in der Höhe sicher arretiert ist und ein unbeabsichtigtes Absenken dieses Dachteiles verhindert wird, ist eine Stützkinematik 7 vorgesehen, die in einem karosseriefesten Dachabschnitt 8 unterhalb der Dachteile 4 und 5 gelagert ist und einen Schwenkhebel 9 sowie eine Kniehebelkinematik 10 umfasst. Der Schwenkhebel 9 ist als Dreieckslenker ausgeführt und über ein Drehgelenk 11 schwenkbar an dem Dachabschnitt 8 gelagert. An einem ersten Arm 9a des Schwenkhebels 9 befindet sich ein Zapfen 12, der bei geschlossenem Dach mit einem auf der Unterseite des vorderen, ersten Dachteiles 4 angeordneten Haken 13 zusammenwirkt. Der zweite Arm 9b des Schwenkhebels 9 erstreckt sich nach hinten in Richtung zum hinteren Dachteil 5 und besitzt an seiner Stirnseite eine Aufnahmegabel 14, die mit der Kniehebelkinematik 10 zusammenwirkt. Sobald der Haken 13 auf der Unterseite des vorderen Dachteiles 4 den Zapfen 12 am Schwenkhebel 9 umfasst, wird der Schwenkhebel 9 um sein dachfestes Drehgelenk 11 verschwenkt, wodurch der zweite Arm 9b des Schwenkhebels angehoben und die Kniehebelkinematik 10 aus der in Fig. 2 dargestellten, zusammengeklappten Position in Richtung ihrer annähernden Streckposition (Fig. 6) angehoben wird, die bei geschlossenen Dachteilen 4 und 5 erreicht wird.

Die Kniehebelkinematik 10 umfasst zwei Kniehebellenker 15 und 16, die über ein zwischenliegendes Drehgelenk 17 gelenkig gekoppelt sind. Der untere Kniehebellenker 15 ist über ein stirnseitiges Drehgelenk 18 schwenkbar am Dachabschnitt 8 gelagert, der obere Kniehebellenker 16 ist über ein ebenfalls stirnseitiges Drehgelenk 19 schwenkbar mit dem hinteren Dachteil 5 gekoppelt.

Die Aufnahmegabel 14 an der Stirnseite des Armes 9b am Schwenkhebel 9 umgreift das Drehgelenk 19, ohne jedoch mit diesem fest verbunden zu sein, und drückt hierdurch bei einer Schwenkbewegung des Schwenkhebels 9 um dessen Drehgelenk 11 den oberen Kniehebellenker 16 nach oben, wodurch auch das hintere Dachteil 5 aus der abgesenkten Position in die angehobene Position aufgestellt wird, in der das Dachteil 5 in einer gemeinsamen Ebene mit der die Dachöffnung umgebenden Dachaußenhaut liegt.

Zum Blockieren der Kniehebelkinematik 10 in der aufgestellten Position ist ein Blockierschlitten 20 vorgesehen, der axial in Fahrtrichtung auf dem Dachabschnitt 8 verfahrbar ist und von einem Federelement 21 in eine zurückgezogene, von der Kniehebelkinematik 10 weg gerichtete Position kraftbeaufschlagt ist. An dem Blockierschlitten 20 greift ein in Fig. 3 dargestellter Bowdenzug 22 an, der anderenends mit dem Schwenkhebel 9 verbunden ist, gegebenenfalls aber auch mit einem weiteren Bauteil gekoppelt sein kann, welches von der Stellbewegung des vorderen Dachteiles 4 betätigt wird. Es kann auch zweckmäßig sein, den Bowdenzug 22 direkt am vorderen Dachteil 4 angreifen zu lassen.

Sobald sich der Schwenkhebel 9 um sein Drehgelenk 11 bewegt, was der Fall ist, wenn der Haken 13 am vorderen Dachteil 4 in Eingriff mit dem Zapfen 12 am Schwenkhebel 9 gelangt, bewegt sich die Aufnahmegabel 14 an dem einen Arm 9b des Schwenkhebels 9 nach unten und drückt hierbei auch die Kniehebelkinematik 10 in Richtung ihrer Strecklage. Zugleich wird der Bowdenzug 22 betätigt und der Blockierschlitten 20 gegen die Kraft des Federelementes 21 in Richtung auf die Kniehebelkinematik 10 verstellt.

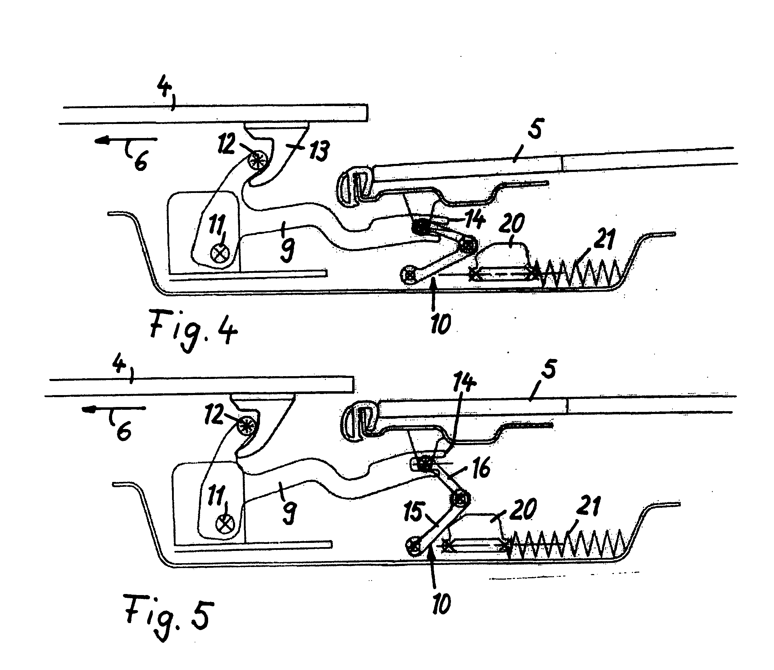

In Fig. 4 ist der Blockierschlitten 20 in einer Position kurz vor Berührung der Kniehebelkinematik 10 dargestellt. In Fig. 5 liegt der Blockierschlitten 20 bereits am unteren Kniehebellenker 20 an und stützt diesen gegen ein Zurückverschwenken in Richtung der eingeklappten Position ab. Zugleich wird das hintere Dachteil 5 durch Beaufschlagung über den Schwenkhebel 9 bzw. die Kniehebelkinematik 10 immer weiter angehoben.

In Fig. 6 ist die Schließposition dargestellt, in der die beiden Dachteile 4 und 5 in einer gemeinsamen Ebene liegen, die zugleich die Ebene der Dachaußenhaut ist. Zwischen den beiden Dachteilen 4 und 5 ist ein Dichtungselement 23 angeordnet, welches an der Stirnseite des hinteren Dachteiles 5 gehalten ist. In der Schließposition befindet sich die Kniehebelkinematik 10 in annähernd in Streckposition, die beiden Kniehebellenker 15 und 16 schließen einen Winkel von mindestens 150° zueinander ein. Der untere Kniehebellenker 15 wird von dem Blockierschlitten 20 gestützt, so dass die Kniehebelkinematik 10 die in Fig. 6 dargestellte Stützposition nicht verlassen kann, auch wenn das hintere Dachteil 5 von außen mit einer hohen, nach unten gerichteten Kraft belastet wird. Derartige Kräfte werden zum größten Teil von der Kniehebelkinematik 10 aufgefangen, darüber hinaus aber auch von dem Blockierschlitten 20 sowie über die Aufnahmegabel 14 auch von dem Schwenkhebel 9.

Zum Lösen der Blockier- bzw. Stützposition muss lediglich das vordere Dachteil 4 wieder geringfügig in Richtung Öffnungsposition verstellt werden, woraufhin der Blockierschlitten 20 unter der Wirkung des Federelementes 21 zurückgezogen wird, so dass die Kniehebelkinematik 10 ihre Stützposition verlassen und in Richtung der zusammengeklappten Position verstellt werden kann. Zugleich verschwenkt der Schwenkhebel 9 um sein dachseitiges Drehgelenk 11, woraufhin der Arm 9b des Schwenkhebels nach unten verschwenkt wird, was die Überführung der Kniehebelkinematik 10 in Richtung der zusammengeklappten Position unterstützt. Das Zurückschwenken des Schwenkhebels 9 kann entweder durch eine weitere Kopplung zwischen dem vorderen Dachteil 4 und dem Schwenkhebel erzeugt werden oder die Schwenkbewegung des Schwenkhebels 9 sowie der Kniehebelkinematik 10 erfolgt unter dem Eindruck der Gewichtskraft, die insbesondere von dem hinteren Dachteil 5 auf die Kniehebelkinematik und über die Aufnahmegabel 14 auch auf den Schwenkhebel übertragen wird.

Im gezeigten Ausführungsbeispiel nimmt die Kniehebelkinematik in der Stützlage eine annähernde Strecklage ein, ohne jedoch die Totpunktlage oder eine Übertotpunktlage zu erreichen. Dennoch kann es in einer alternativen Ausführung auch zweckmäßig sein, dass die Kniehebelkinematik in Stützposition auch eine Totpunkt- oder Übertotpunktlage einnimmt.

### Bezugszeichenliste

- 1: Fahrzeugdach
- 2: Dachaußenhaut
- 3: Dachöffnung
- 4: vorderes Dachteil
- 5: hinteres Dachteil
- 6: Pfeilrichtung
- 7: Stützkinematik
- 8: Dachabschnitt
- 9: Schwenkhebel
- 9a: Arm
- 9b: Arm
- 10: Kniehebelkinematik
- 11: Drehgelenk
- 12: Zapfen
- 13: Haken
- 14: Aufnahmegabe
- 15: Kniehebellenker
- 16: Kniehebellenker
- 17: Drehgelenk
- 18: Drehgelenk
- 19: Drehgelenk
- 20: Blockierschlitten
- 21: Federelement
- 22: Bowdenzug
- 23: Dichtungselement

## Patentansprüche

1. Fahrzeugdach (1) mit mindestens zwei öffnungsfähigen Dachteilen, die in Schließposition eine Dachöffnung (3) abdecken, welche in Öffnungsposition freigegeben ist, mit einer Verriegelungseinrichtung, über die mindestens ein Dachteil (4, 5) in Schließposition zu fixieren ist, wobei in Öffnungsposition mindestens ein Dachteil (5) gegenüber dem Niveau der festen Dachaußenhaut (2) in eine abgesenkte Lage verstellt ist,
**dadurch gekennzeichnet,**
**dass** die Verriegelungseinrichtung eine Stützkinematik (7) umfasst, die in Schließposition das absenkbare Dachteil (5) abstützt, wobei die Stützkinematik (7) von dem anderen Dachteil (4) in ihre Stützposition beaufschlagt ist.

2. Fahrzeugdach nach Anspruch 1,
**dadurch gekennzeichnet,**
**dass** die Stützkinematik (7) als Kniehebelkinematik (10) ausgebildet ist, die von dem ersten, die Stützkinematik (7) beaufschlagenden Dachteil (4) in eine zumindest annähernde Strecklage zu verstellen ist, in der das zweite, absenkbare Dachteil (5) von einem Kniehebellenker (15, 16) der Kniehebelkinematik (10) gestützt ist.

3. Fahrzeugdach nach Anspruch 2,
**dadurch gekennzeichnet,**
**dass** die Kniehebelkinematik (10) insgesamt zwei gelenkig verbundene Kniehebellenker (15, 16) umfasst.

4. Fahrzeugdach nach Anspruch 2 oder 3,
**dadurch gekennzeichnet,**
**dass** ein Kniehebellenker (15, 16) gelenkig mit dem zweiten, abzustützenden Dachteil (5) verbunden ist.

5. Fahrzeugdach nach einem der Ansprüche 1 bis 4,
**dadurch gekennzeichnet,**
**dass** die Stützkinematik (7) einen Übertragungslenker umfasst, der in Schließposition des Fahrzeugdaches (1) von dem ersten Dachteil (4) beaufschlagt ist und auf der dem ersten Dachteil (4) abgewandten Seite einen dem zweiten Dachteil (5) zugeordneten Lenker (16) beaufschlagt.

6. Fahrzeugdach nach Anspruch 5,
**dadurch gekennzeichnet,**
**dass** der Übertragungslenker als Schwenkhebel (9) ausgebildet ist, der um ein Drehgelenk (11) schwenkbar gelagert ist.

7. Fahrzeugdach nach Anspruch 6,
**dadurch gekennzeichnet,**
**dass** das Drehgelenk (11) des Schwenkhebels (9) an einem karosseriefesten Dachabschnitt (8) gelagert ist.

8. Fahrzeugdach nach einem der Ansprüche 5 bis 7,
**dadurch gekennzeichnet,**
**dass** der Übertragungslenker einen Kniehebellenker (16) der Kniehebelkinematik (10) beaufschlagt.

9. Fahrzeugdach nach einem der Ansprüche 1 bis 8,
**dadurch gekennzeichnet,**
**dass** die Stützkinematik (7) in der Stützposition gegen unbeabsichtigtes Verlassen der Stützposition gesichert ist.

10. Fahrzeugdach nach Anspruch 9,
**dadurch gekennzeichnet,**
**dass** die Stützkinematik (7) in der Stützposition von einem vom ersten Dachteil (4) zu betätigenden Bauteil (20) gesichert ist.

11. Fahrzeugdach nach Anspruch 9 oder 10,
**dadurch gekennzeichnet,**
**dass** die Stützkinematik (7) in der Stützposition von einem Blockierschlitten (20) beaufschlagt ist.

12. Fahrzeugdach nach Anspruch 11,
**dadurch gekennzeichnet,**
**dass** der Blockierschlitten (20) über einen Bowdenzug (22) mit dem ersten Dachteil (4) gekoppelt ist.

13. Fahrzeugdach nach Anspruch 11 oder 12,
**dadurch gekennzeichnet,**
**dass** der Blockierschlitten (20) von einem Federelement (21) kraftbeaufschlagt ist.

14. Fahrzeugdach nach einem der Ansprüche 1 bis 13,
**dadurch gekennzeichnet,**
**dass** die Stützkinematik (7) an einem karosseriefesten Dachabschnitt (8) gelagert ist.

15. Fahrzeugdach nach einem der Ansprüche 1 bis 14,
**dadurch gekennzeichnet,**
**dass** das erste Dachteil (4) das in Fahrtrichtung vorne liegende Dachteil (4) und das zweite, abzustützende Dachteil (5) das dahinter liegende Dachteil (5) ist.

16. Fahrzeugdach nach einem der Ansprüche 1 bis 15,
**dadurch gekennzeichnet,**
**dass** die Dachteile (4, 5) in Öffnungsposition übereinander liegend angeordnet sind.
